# EUROPÄISCHE PATENTSCHRIFT

(11) **EP 0 712 568 B1**
(45) Veröffentlichungstag und Bekanntmachung des Hinweises auf die Patenterteilung: **01.12.1999**
(21) Anmeldenummer: 95115375.8
(22) Anmeldetag: 29.09.1995
(51) Int. Cl.: A01D 75/28, A01D 34/47

(54) **Vorrichtung zum Mähen, Vertikutieren und/oder Aufsammeln**
Device for mowing, aerating, and/or collecting
Dispositif à faucher, aérer et/ou ramasser

(30) Priorität: 15.11.1994 DE 4440825
(43) Veröffentlichungstag der Anmeldung: 22.05.1996
(73) Patentinhaber: Amazone Machines Agricoles S.A., F-57602 Forbach (FR)
(72) Erfinder: Klein, Laurent, F-57350 Spicheren (FR)

(56) Entgegenhaltungen:
- EP-A- 0 245 824
- EP-A- 0 344 128
- DE-A- 1 507 423
- DE-A- 2 543 305
- GB-A- 2 048 638
- US-A- 3 077 065

## Beschreibung

Die Erfindung betrifft eine Vorrichtung gemäß des Oberbegriffes des Patentanspruches 1.

Derartige Vorrichtungen sind in der Praxis bekannt. Diese Mähvorrichtungen weisen einen Rahmen auf, an dem in Höhenrichtung bewegbar ein Mähwerk angeordnet ist. Vor und hinter diesem Mähwerk sind gegenüber dem Mähwerk zur Einstellung der Schnitthöhe des Mähwerkes verstellbare Führungselemente angeordnet. Hierbei sind die vorderen und die hinteren Führungselemente jeweils einzeln direkt am Mähwerk befestigt und in Höhenrichtung einstellbar. Bei unebenen Gelände wird die Höhenführung der Mähmesser des Mähwerkes durch die vorderen oder hinteren Führungselemente und bei extremen Bodenunebenheiten, wenn die Relativbewegung des Mähwerkes gegenüber dem Fahrwerksrahmen nicht ausreicht, durch das das Mähwerk tragende Trägerfahrzeug vorgenommen. Dieses führt bei der bekannten starren Verbindung der vorderen Führungselemente und der hinteren Führungselemente gegenüber dem Mähwerk dazu, daß das Mähwerk bei ansteigender Bodenunebenheit zunächst einen zu großen Abstand zum Boden aufweist und somit die gewünschte Schnittlänge unerwünscht vergrößert wird. Bei abfallender Bodenunebenheit übernimmt das hintere Stützelement die Trägerfunktion, so daß das Mähwerk zu lange hochgehalten wird und somit auch die Schnittlänge der Rasenfläche unerwünscht verkleinert wird. Darüber hinaus wird durch die Abstandsänderung des Mähwerkes zum Boden die Schutzwirkung der Seitenteile des Mähwerkes durch die Vergrößerung des Spaltes zwischen Boden und Mähwerk teilweise in unzulässiger Weise herabgesetzt.

Der Erfindung liegt die Aufgabe zugrunde, hier auf einfache Weise Abhilfe zu schaffen und eine gleichmäßige Abstandsführung des Mähwerkes zur Bodenoberfläche auch in extrem unebenen Gelände zu ermöglichen.

Diese Aufgabe wird erfindungsgemäß durch die kennzeichnenden Maßnahmen des Anspruches 1 gelöst.

Infolge dieser Maßnahmen wird in überaschend einfacher Weise auch bei extremen Bodenunebenheiten der zu mähenden Fläche gewährleistet, daß das Mähwerk in einem gleichmäßigen Abstand zur Bodenoberfläche geführt wird, so daß die Rasenfläche gleichmäßig gemäht werden kann, so daß die Graslänge gleichbleibend ist.

Die Achse, um den die Traverse dreht, kann mit der Drehachse der Mähwerkstrommel zusammenfallen oder etwa senkrecht unterhalb der Drehachse der Mähwerkstrommel liegen.

Um die gewünschte Schnitthöhe zu erreichen, ist vorgesehen, daß die Achse in Höhenrichtung zur Einstellung der Schnitthöhe einstellbar ist.

Um eine möglichst exakte Anpassung des Mähwerkes an unebene Bodenoberflächen, die auch schräg zur Fahrtrichtung der Mähvorrichtung abfallen können, erreichen zu können, ist vorgesehen, daß die jeweils seitlich des Mähwerks angeordneten Traversen, die die Tiefenführungselemente tragen, unabhängig voneinander um die Achse verschenkbar sind.

Durch die erfindungsgemäße Aufhängung der die Führungselemente tragenden Traversen an dem Mähwerk, ist es darüber hinaus möglich, die Schutzelemente in einem kleinen gleichbleibenden Abstand zur Bodenoberfläche zu führen. Hierbei können die Traverse selbst und/oder an ihr angeordnete Teile derart ausgebildet sein, daß sie als Schutzelement gegen seitlich austretene Fremdkörper dienen und als Abstandshalter gegen Verletzungsgefahr dienen.

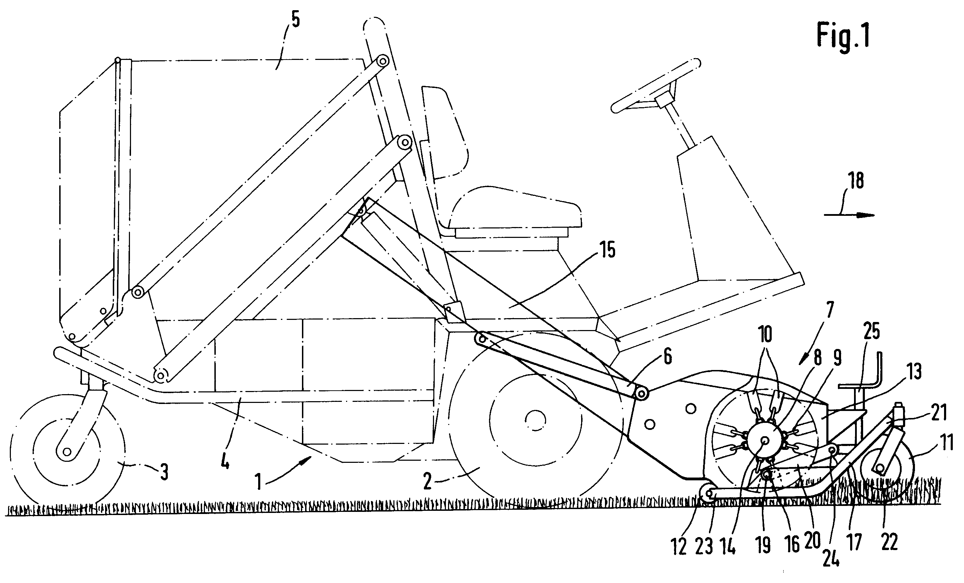

Weitere Einzelheiten der Erfindung sind der Beispielsbeschreibung und den Zeichnungen zu entnehmen. Hierbei zeigen
- Fig.1: die Mähvorrichtung in Seitenansicht und in Prinzipdarstellung auf ebenen Gelände,

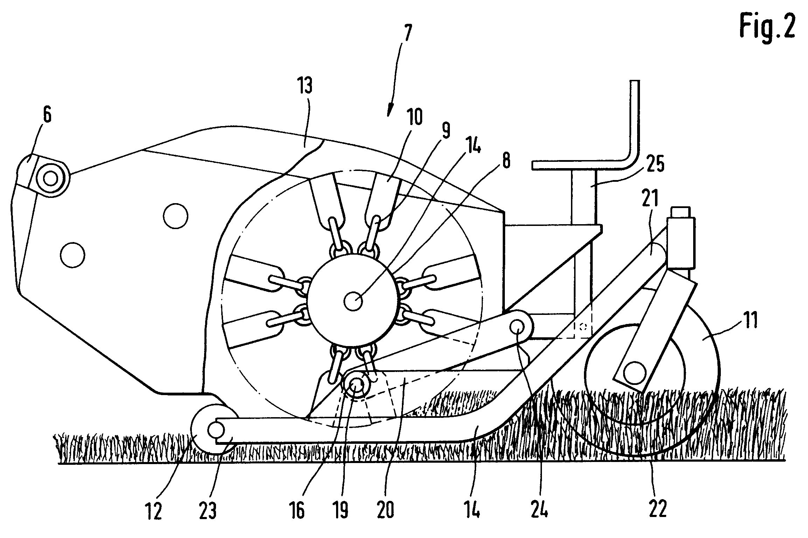

- Fig.2: das Mähwerk der Mähvorrichtung gemäß Fig. 1 in vergrößertem Maßstab,
- Fig.3: die Mähvorrichtung auf unebenem Gelände, wobei die zu mähende Fläche ansteigt,
- Fig.4: das Mähwerk der Mähvorrichtung gemäß Fig.3 in vergrößertem Maßstab,
- Fig.5: die Mähvorrichtung auf unebenem Gelände, wobei die zu mähende Fläche abfällt und
- Fig.6: das Mähwerk der Mähvorrichtung gemäß Fig.5 in vergrößertem Maßstab.

Die Vorrichtung zum Mähen, Vertikutieren und/oder Aufsammeln kann als vielseitiges Gerät ausgebildet sein und läßt sich neben dem Mähen von Grünflächen auch als Vertikutier-oder Aufsammelgerät einsetzen. Die Mähvorrichtung gemäß Ausführungsbeispiel weist das Fahrwerk 1 mit den beiden angetriebenen Vorderrädern 2 und dem hinteren Laufrad 3 auf. An dem Rahmen 4 der Mähvorrichtung ist auf dessen Rückseite der Sammelbehälters 5 angeordnet. Auf der Vorderseite der Mähvorrichtung ist über das untere Lenkerpaar 6 die als Mähwerk 7 ausgebildete Bearbeitungsvorrichtung in Höhenrichtung bewegbar angeordnet. Das Mähwerk 7 weist die rotierend angetriebene Mähtrommel 8 auf, an der über Halterungen 9 die Mähmesser 10 befestigt sind. Auf der Vorderseite des Mähwerkes 7 befinden sich die beiden in Höhenrichtung einstellbaren und pendelnd angeordneten Laufräder 11, über welche in Verbindung mit der hinter dem Mähwerk 7 angeordneten Walze 12 die Schnitthöhe der Mähmesser 10 des Mähwerkes 7 einstellbar ist, wie auch weiter unten erläutert wird. Über eine nicht dargestellte Aushebevorrichtung kann das Mähwerk 7 nach oben in eine Transportstellung angehoben werden.

An dem Gehäuse 13 des Mähwerkes 7 ist oberhalb der Drehachse 14 der Mähtrommel 8 die das Mähgut in den Sammelbehälter 5 führende Förderschnecke 15 angeordnet, welche starr an dem Gehäuse 13 des Mähwerkes 7 befestigt ist. Das Förderrohr der Förderschnecke 15 bildet den weiteren Lenker für das Mähwerk 7 zur Anlenkung und Führung des Mähwerkes 7 gegenüber dem Rahmen 4 der Mähvorrichtung.

Auf jeder Außenseite des Mähwerkes 7 sind mittels eines Gelenkes 16 die Traversen 17 um eine horizontale und quer zur Fahrtrichtung 18 verlaufende Achse 19 schwenkbar gegenüber dem Mähwerk 7 angeordnet. Die Achse 19, die durch die Gelenke 16, mit denen die Traversen 17 jeweils an einem Schwenkarm 20 so angeordnet sind, befindet sich etwa senkrecht unterhalb der Drehachse 14 der Mähtrommel 8. An der Vorderseite 21 jeder Traverse 17 ist ein auf der Bearbeitungsfläche 22 abrollendes Führungselement, im Ausführungsbeispiel jeweils ein Pendellaufrad 11 angeordnet. An der Rückseite 23 der Traversen 17 ist jeweils ebenfalls ein Führungselement, im Ausführungsbeispiel eine über die gesammte Bearbeitungsbreite des Mähwerkes 8 verlaufende Walze 12 angeordnet. Die Walze 12 ist auf jeder Seite in der auf den Außenseiten des Mähwerkes 7 angeordneten Traversen 17 drehbar gelagert.

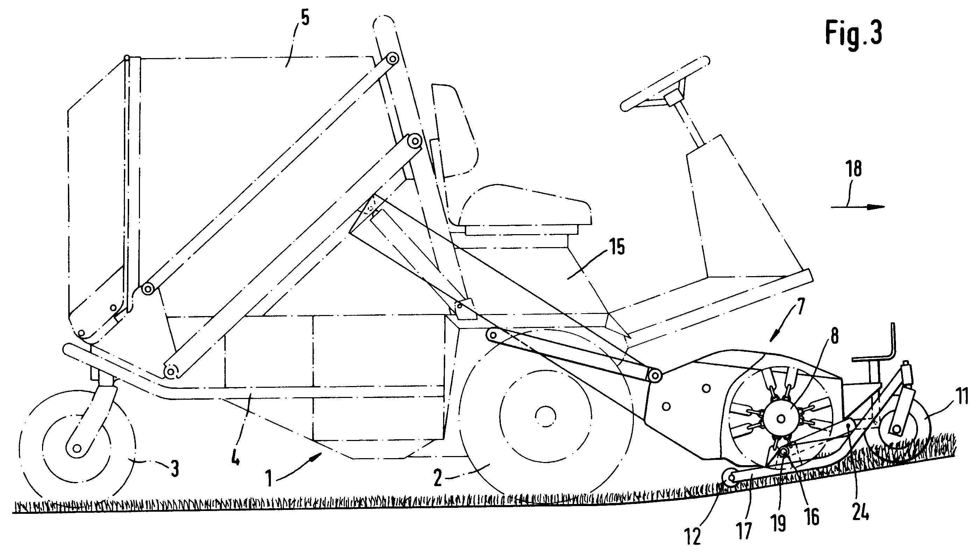

Die Traversen 17 sind jeweils mittels der Gelenke 16 an einem Schwenkarm 20 angelenkt, welcher an dem Mähwerksrahmen 13 des Mähwerkes 7 mittels des Gelenkes 24 drehbar gelagert ist. Desweiteren ist jeder Schwenkarm 20 über eine Stellvorrichtung 25 in Höhenrichtung verschwenkbar, so daß das Gelenk 16 in Höhenrichtung verstellbar ist, um die Schnitthöhe des Mähwerkes 7 einstellen zu können. Die beiden Traversen 17 sind unabhängig voneinander um die Achse zueinander verschwenkbar. Durch die Anordnung der Führungselemente 11 und 12 an den Traversen 19 und der vorbeschriebenen Anordnung der Traversen 19 an dem Mähwerk 7 wird von den Traversen 19 und den Führungselementen 11 und 12 das gemeinsame Führungs- und Fahrgestell gebildet. Hierdurch wird erreicht, daß auch auf unebenen Gelände das vordere 11 und das hintere Führungselement 12 immer Bodenkontakt haben, so daß das Mähwerk 7 durch diese neue Führung optimal der Bodenkontur fogen kann, wie dieses die Figuren 3-6 zeigen.

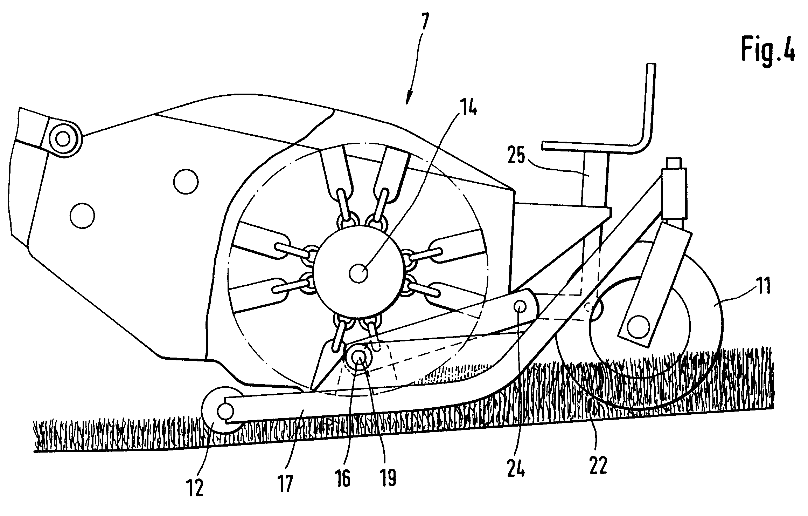

Gemäß den Fig. 3 und 4 wird das Mähwerk 7 eine ansteigende Erhebung heraufgeschoben. Dadurch, daß das Laufrad 11 die Erhebung heraufführt wird, wird die Traverse 17 um die Achse 19 verschwenkt, wobei die Walze 12 Bodenkontakt behält. Das Mähwerk 7 folgt also der Bodenkontur. Durch die pendelnde Aufhängung der vorderen Laufräder 11 und der Bodenwalze 12 hinter der Mähtrommel 8 wird das Mähwerk 7 nicht durch die Laufräder 11 auf das Niveau der Bodenerhebung unter den Laufrädern 11 angehoben.

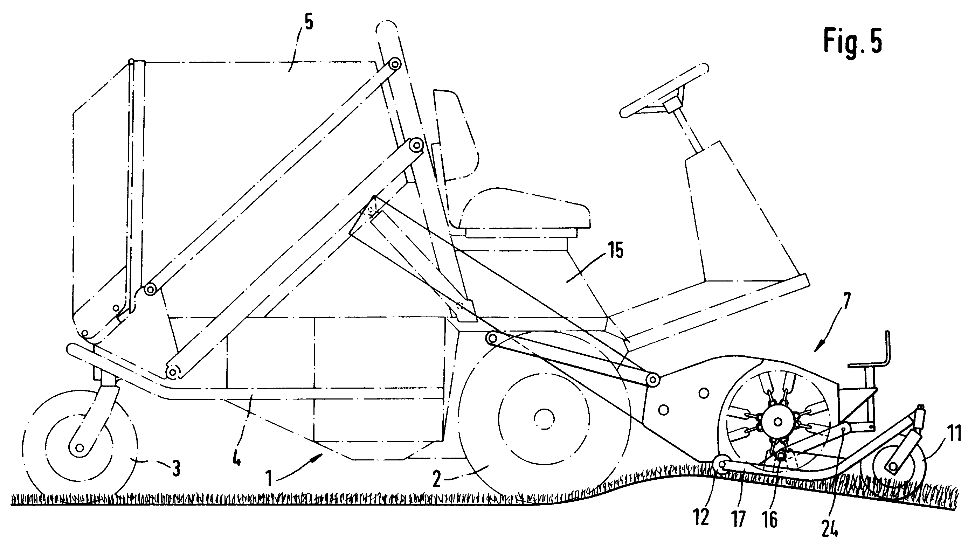

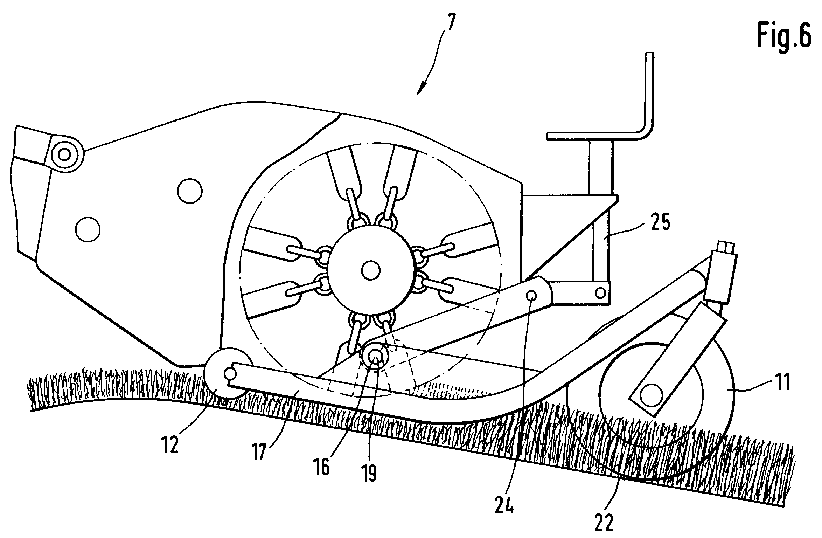

Gemäß den Fig. 5 und 6 wird das Mähwerk 7 die abfallende Seite der Erhebung hinabgeschoben. Das Laufrad 11 und die Walze 12 liegen auf dem Boden auf. Die Traversen 17 sind gegenüber der Stellung in den Fig. 3 und 4 entsprechend verschwenkt.

Somit kann das Mähwerk 7 der Bodenkontur optimal folgen. Die Walze 12 und die Laufräder 11 haben einen relativ geringen Abstand zueinander, so daß sich ein kleiner Radstand ergibt. Durch die pendelnde Aufhängung der Traversen 17 folgt das Fahrgestell für das Mähwerk 7 auch einer unebenen Bodenkontur und Bodenoberfläche.

Weiterhin ist die Traverse selbst so ausgebildet, daß sie im Bereich der Mähtrommel 8 bis dicht an die Bodenoberfläche 22 heranreicht. Dadurch, daß die Traversen 19 optimal der Bodenkontur nachgeführt werden, wird ein guter Schutz gegen seitlich austretende Fremdkörper erreicht. Somit wirken die Traverse 19 als Schutzelement gegen seitlich austretende Fremdkörper. Auch ist die Verletzungsgefahr für seitlich an die Maschine herantretende Personen sehr gering, weil die Traversen 19 als Abstandshalter gegen Verletzungsgefahren dient. Es ist auch möglich, an den Traversen 19 Teile anzuordnen, die als Schutzelemente und Abstandshalter wirken.

Durch die neue erfindungsgemäße Anordnung der vorderen und hinteren Tiefenführungselemente 11 und 12 jeweils an einer gemeinsamen, schwenkbar aufgehängten Traverse 19 wird die Höhenführung des Mähwerkes 7 durch die Bewegungen des Fahrzeuges durch Bodenunebenheit quasi nicht beeinflußt.

## Patentansprüche

1. Vorrichtung zum Mähen, Vertikutieren und/oder Aufsammeln mit einer gegenüber dem Rahmen in Höhenrichtung bewegbar angeordneten, vorzugsweise als Mähwerk ausgebildeten und einen um eine quer zur Fahrtrichtung liegende, horizontale Drehachse rotierenden Bearbeitungsrotor aufweisende Bearbeitungseinrichtung mit vor und hinter der Bearbeitungseinrichtung angeordneten und gegenüber der Bearbeitungseinrichtung zur Einstellung der Schnitthöhe oder Arbeitshöhe der Bearbeitungseinrichtung verstellbaren Führungselementen, dadurch gekennzeichnet, daß die vor und hinter der Bearbeitungseinrichtung angeordneten Führungselemente an gegenüberliegenden Enden zumindest einer gemeinsamen Traverse angeordnet sind, daß die Traverse (17) zwischen den Führungselementen (11,12) an der Bearbeitungseinrichtung (7) mittels eines Gelenkes (16) um eine quer zur Fahrtrichtung (18) verlaufende horizontale Achse (19) in aufrechter Ebene schwenkbar angeordnet ist, und daß die Achse (19) sich in der Nähe der durch die Drehachse (14) verlaufenden Vertikalebene befindet.

2. Vorrichtung nach Anspruch 1, dadurch gekennzeichnet, daß die Achse (19) mit der Drehachse (14) der Bearbeitungstrommel (8) zusammenfällt.

3. Vorrichtung nach Anspruch 1, dadurch gekennzeichnet, daß die Achse (19) etwa senkrecht unterhalb der Drehachse (14) der Bearbeitungstrommel (8) liegt.

4. Vorrichtung nach einem oder mehreren der vorstehenden Ansprüche, dadurch gekennzeichnet, daß die Achse (19) in Höhenrichtung zur Einstellung der Schnitthöhe verstellbar ist.

5. Vorrichtung nach einem oder mehreren der vorstehenden Ansprüche, dadurch gekennzeichnet, daß die Traversen (17) jeweils an einem Schwenkarm (20) angelenkt sind, welcher über eine Stellvorrichtung (25) in Höhenrichtung verstellbar ist.

6. Vorrichtung nach einem oder mehreren der vorstehenden Ansprüche, dadurch gekennzeichnet, daß die Traversen (17) unabhängig voneinander um die Achse (19) verschwenkbar sind.

7. Vorrichtung nach einem oder mehreren der vorstehenden Ansprüche, dadurch gekennzeichnet, daß die Traversen (17) selbst und/oder an ihr angeordnete Teile derart ausgebildet sind, daß sie als Schutzelement gegen seitlich austretende Fremdkörper dient und/oder als Abstandshalter gegen Verletzugsgefahr dient.

## Claims

1. Apparatus for mowing, scarifying and/or collecting purposes, having a cultivator which is disposed so as to be displaceable in the vertical direction relative to the frame, said cultivator preferably being in the form of a mower and having a cultivating rotor which rotates about a horizontal axis of rotation lying transversely relative to the direction of travel, and said apparatus having guide members which are disposed in front of and behind the cultivator and are adjustable relative to the cultivator in order to set the cutting height or working height of the cultivator, characterised in that the guide members, which are disposed in front of and behind the cultivator, are disposed on oppositely situated ends of at least one commom crosspiece member, in that the crosspiece member (17) is disposed between the guide members (11, 12) on the cultivator (7) so as to be pivotable, by means of a pivot joint (16), in an upwardly extending plane about a horizontal axis (19), which extends transversely relative to the direction of travel (18), and in that the axis (19) is situated in the vicinity of the vertical plane extending through the axis of rotation (14).

2. Apparatus according to claim 1, characterised in that the axis (19) coincides with the axis of rotation (14) of the cultivating drum (8).

3. Apparatus according to claim 1, characterised in that the axis (19) lies substantially perpendicularly beneath the axis of rotation (14) of the cultivating drum (8).

4. Apparatus according to one or more of the preceding claims, characterised in that the axis (19) is adjustable in the vertical direction in order to set the cutting height.

5. Apparatus according to one or more of the preceding claims, characterised in that the crosspiece members (17) are each pivotally mounted on a pivotal arm (20), which is adjustable in the vertical direction via an adjusting device (25).

6. Apparatus according to one or more of the preceding claims, characterised in that the crosspiece members (17) are pivotable about the axis (19) independently or one another.

7. Apparatus according to one or more of the preceding claims, characterised in that the crosspiece member (17) itself and/or parts disposed thereon are configured in such a manner that it serves as a means for protection against laterally emerging foreign bodies and/or serves as a spacer member to prevent any risk of injury.

## Revendications

1. Dispositif pour faucher, aérer et/ou ramasser, comportant une installation de travail montée mobile en hauteur par rapport au châssis, de préférence en forme de mécanisme de fauche et comportant un rotor de travail tournant autour d'un axe horizontal, transversal par rapport à la direction de déplacement, et des éléments de guidage prévus en avant et en arrière de l'installation de travail et réglables par rapport à cette installation pour régler la hauteur de coupe ou la hauteur de travail de l'installation,
caractérisé en ce que
- les éléments de guidage devant et derrière l'installation de travail sont prévus sur les extrémités opposées d'au moins une traverse commune,
- la traverse (17) est montée basculante entre les éléments de guidage (11, 12) sur l'installation de travail (7), par l'intermédiaire d'une articulation (16) autour d'un axe horizontal (19) tourné vers la direction de déplacement (18) et monté pivotant dans le plan vertical, et
- l'axe (19) se trouve a proximité du plan vertical passant par l'axe de rotation (14).

2. Dispositif selon la revendication 1,
caractérisé en ce que
l'axe (19) coïncide avec l'axe de rotation (14) du tambour de travail (8).

3. Dispositif selon la revendication 1,
caractérisé en ce que
l'axe (19) se trouve sensiblement à la verticale en dessous de l'axe de rotation (14) du tambour de travail (8).

4. Dispositif selon l'une ou plusieurs des revendications précédentes,
caractérisé en ce que
l'axe (19) est réglable en hauteur pour régler la hauteur de coupe.

5. Dispositif selon l'une ou plusieurs des revendications précédentes,
caractérisé en ce que
les traverses (17) sont chaque fois articulées sur un bras pivotant (20) réglable en hauteur par un dispositif de réglage (25).

6. Dispositif selon l'une ou plusieurs des revendications précédentes,
caractérisé en ce que
les traverses (17) peuvent basculer autour de l'axe (19) indépendamment l'une de l'autre.

7. Dispositif selon l'une ou plusieurs des revendications précédentes,
caractérisé en ce que
les traverses (17) sont réalisées elles-mêmes et/ou sur des parties prévues sur celles-ci, pour servir d'éléments protecteurs contre la sortie latérale de corps étrangers et/ou d'organes d'écartement pour se protéger contre les accidents.
